Europäisches Patentamt

(19) European Patent Office

Office européen des brevets

(11) Numéro de publication: **0 120 783**
**B1**

(12) **FASCICULE DE BREVET EUROPEEN**

(45) Date de publication du fascicule du brevet:
20.11.86

(51) Int. Cl.⁴: **F 16 L 55/12**

(21) Numéro de dépôt: **84400586.8**

(22) Date de dépôt: **22.03.84**

(54) **Dispositif d'isolement et de protection pour intervention sur tuyauterie, notamment tuyauterie de centrale nucléaire.**

(30) Priorité: **24.03.83 FR 8304837**

(43) Date de publication de la demande:
**03.10.84 Bulletin 84/40**

(45) Mention de la délivrance du brevet:
**20.11.86 Bulletin 86/47**

(84) Etats contractants désignés:
**BE DE GB IT NL**

(56) Documents cités:
**GB - A - 383 379**
**GB - A - 540 775**
**US - A - 1 695 187**
**US - A - 2 487 991**

(73) Titulaire: **ELECTRICITE DE FRANCE Service National, 2, rue Louis Murat, F-75008 Paris (FR)**

(72) Inventeur: **Dohlen, Gérard, Rue du Château d'eau, F-77250 Ecuelle (FR)**
Inventeur: **Le Marquis, Jean-Claude, 29, rue de la République, F-77250 Moret sur Loing (FR)**
Inventeur: **Oberlin, Claude, 24, rue du Général de Gaulle, F-77210 Avon (FR)**

(74) Mandataire: **Schrimpf, Robert et al, Cabinet Regimbeau 26, Avenue Kléber, F-75116 Paris (FR)**

## Description

La présente invention concerne un dispositif d'isolement et de protection destiné à être utilisé lors des travaux d'entretien ou de réfection de conduites devant être maintenues sous atmosphère contrôlée de gaz neutre pendant ces interventions. Il en est notamment ainsi des circuits sodium des centrales nucléaires.

Par ailleurs, lorsque des travaux d'usinage (tronçonnage, meulage, soudure, ...) sont effectués sur la conduite, il est absolument indispensable de récupérer avec soin tous les copeaux, déchets, ... produits par les différents outils ou machines employés. En effet, les corps étrangers qui pourraient subsister au fond de la conduite seraient, après remise en service de l'installation, entraînés par le fluide véhiculé par la conduite et pourraient endommager gravement les vannes, paliers de pompes, ... et autres organes sensibles de l'installation.

Jusqu'à présent, l'opérateur procédait à une aspiration soigneuse de tous les copeaux tombés au fond de la conduite. La méthode présente bien sûr un caractère empirique qui n'assure qu'une protection incertaine des circuits après remise en service de l'installation; il est en outre nécessaire d'isoler, vidanger et refroidir la partie de conduite sur laquelle l'intervention est nécessaire. Toutes ces opérations sont longues et coûteuses en main d'oeuvre; elles imposent un arrêt de service d'assez longue durée pour l'installation.

Pour d'autres applications, on utulise un piston racleur introduit à une extrémité de la conduite et véhiculé jusqu'à l'autre extrémité; pendant le parcours, le piston balaie tous les corps étrangers présents dans la conduite. Cette solution ne présente cependant d'intérêt que pour les conduites de grande longueur et, en tout état de cause, elle permet difficilement une intervention ponctuelle en atmosphère contrôlée: la conduite doit en effet être libérée sur toute sa longueur, et ouverte à ses deux extrémités.

Au contraire, le dispositif proposé par la présente invention permet de maintenir les circuits sous atmosphère contrôlée de gaz neutre en assurant l'étanchéité du circuit vis-à-vis de l'extérieur, pendant toute la durée des opérations, et d'intervenir alors que les circuits sont encore en température (après vidange de la conduite, celle-ci est à une température voisine de celle du sodium liquide, de l'ordre de 180°C) en localisant les opérations à la zone d'intervention et en évitant à l'opérateur une visite minutieuse de l'intérieur de la conduite.

Pour cela, le dispositif, qui est destiné à être introduit et déployé à l'intérieur de la conduite, comporte: un mât central; un joint d'étanchéité déformable (par exemple un joint gonflable) apte à épouser la forme intérieure de la conduite; une pluralité de bras (par exemple des bras télescopiques de longueurs variables dont les éléments sont soumis à la tension d'un ressort ou à la pression engendrée par des vérins pneumatiques) régulièrement répartis autour du mât, rabattables contre celui-ci pour permettre l'introduction du dispositif dans la conduite, chaque bras supportant le joint à l'une de ses extrémités et étant articulé sur une embase commune à son autre extrémité;

des moyens mécaniques de serrage, reliés au mât et à l'embase, pour déployer le dispositif et plaquer le joint contre la surface intérieure de la conduite dont il doit épouser la forme; ainsi qu'un voile, supporté à sa périphérie par le joint et apte à isoler de manière étanche les volumes qu'il délimite.

Des dispositifs répondant à cette définition sont par exemple décrits par les GB-A-540 775 et GB-A-383 379 (à l'exception du voile, non dédoublé). Ces dispositifs sont cependant insusceptibles de resoudre le problème posé ci-dessus, car ils sont utilisés en coupe-flux, le profil du joint étant sensiblement plan et circulaire de manièpre à isoler deux sections de la conduite entre elles et non, comme dans l'invention, le volume intérieur de la conduite d'avec l'atmosphère extérieure.

A cet effet, selon l'invention, le mât central est un mât extensible adaptable aux dimensions de la conduite dont l'une des extrémités forme point d'appui sur le fond de la conduite, et l'autre extrémité supporte un organe de manoeuvre des moyens mécaniques de serrage et le dispositif comporte un second voile supporté à sa périphérie par le joint et éventuellement apte à isoler de manière étanche les volumes qu'il délimite.

Le voile supérieur permet alors la récupération des copeaux d'usinage produits pendant l'intervention, ou permet le déroulement de certaines manipulations spéciales, telles que la mise en place de films pour contrôles gammagraphiques, en évitant que des objets puissent tomber à l'intérieur du circuit.

Les deux voiles sont alors avantageusement formés d'une matière élastomère armée.

Le second voile (voile inférieur) permet, si le premier voile se trouvait percé pour une raison quelconque, de continuer à assurer la protection de la conduite vis-à-vis de l'extérieur, tant en ce qui concerne l'étanchéité que la récupération des corps étrangers.

Pour permettre son remplacement, le premier voile peut être fixé au joint au moyen d'une fermeture à glissière. Dans ce cas, c'est le second voile qui parfait l'étanchéité.

En variante, l'un au moins des voiles est formé d'une matière thermiquement réfractaire. Le dispositif de l'invention permet alors de protéger d'un flux gazeux chaud, jouant ainsi un rôle de bouclier thermique, outre celui de moyen d'étanchéité.

D'autres caractéristiques et avantages de l'invention apparaîtront à la lecture de la description détaillée ci-dessous, faite en référence aux dessins annexés, sur lesquels:

la figure 1 est une vue, partiellement en coupe, du dispositif de l'invention monté à l'intérieur d'une conduite, vue en coupe transversale,

la figure 2 est une coupe longitudinale d'une conduite montrant schématiquement le dispositif disposé, en récupérateur de copeaux, diamétralement dans la conduite.

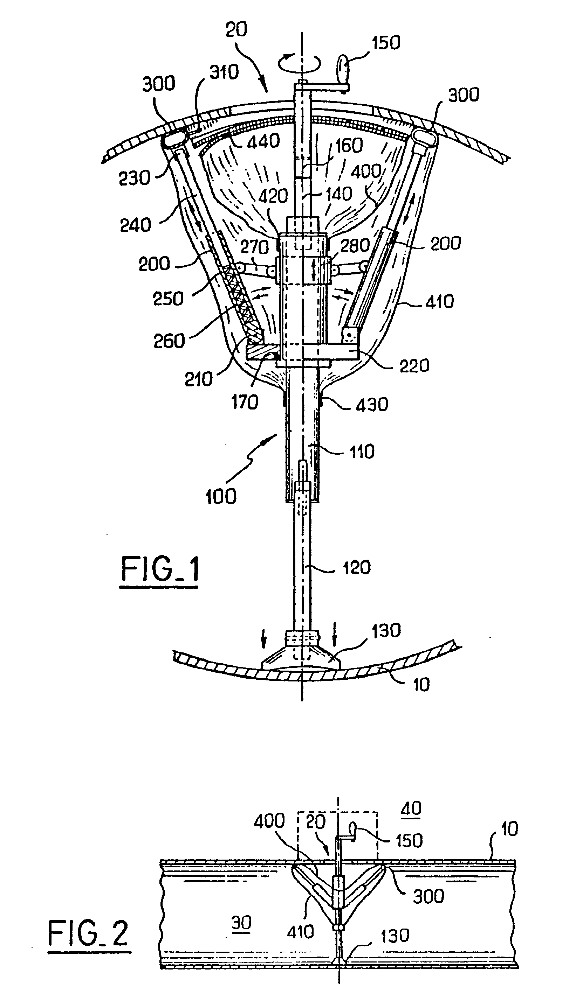

Sur la figure 1, le dispositif de l'invention est monté à l'intérieur de la conduite 10, vue en coupe transversale, dans laquelle il a été introduit par une ouverture 20 pratiquée en partie supérieure.

Le dispositif représenté se compose d'un mât central 100 sur lequel viennent s'articuler une pluralité de bras télescopiques 200 supportant un joint déformable 300 épousant la forme intérieure de la conduite.

Le mât central 100 se compose d'une tige centrale 110 dans laquelle coulisse une tige d'extrémité 120 munie en bout d'un patin 130 en élastomère évitant le glissement. L'ajustement en hauteur de la tige 120 et l'appui du patin 130 entre le fond de la conduite sont réalisés par un ensemble vis-écrou commandé en partie supérieure par la rotation de la tige 140 entraînée par la manivelle 150. Une articulation 160 facilite la manoeuvre de la manivelle dans les configurations difficiles.

Chacun des bras 200 est articulé à l'une de ses extrémités 210 sur une embase commune 220 reposant sur un épaulement 170 de l'axe central. L'autre extrémité 230 soutient je joint 300.

Ces bras ont une structure télescopique: l'élément supérieur 240 coulisse à l'intérieur de l'élément inférieur 250, et il est soumis à la tension d'un ressort 260 ou la pression d'un vérin pneumatique. Le joint 300 est ainsi plaqué en permanence contre la surface intérieure de la conduite dont il doit épouser la forme.

Pour faciliter le repliement et le déploiement des bras, il est prévu une pièce de retenue 270 reliée à une bague coulissante commune 280: ainsi, le déploiement des bras se fait de manière régulière autour du mât central.

Le joint 300 assure l'étanchéité vis-à-vis de l'extérieur, et doit permettre de maintenir une surpression maximum à l'intérieur de la conduite de l'ordre de $10^4$Pa (0,1 bar). Cette étanchéité doit en outre être assurée même si le profil du joint une fois en place est celui d'une courbe gauche. On choisit de préférence un joint gonflable, dont la mise sous pression est assurée depuis l'extérieur par la valve 310.

L'ensemble supporte un premier voile 400 dont le rôle est de recueillir les déchets métalliques, et un second voile 410 assurant l'étanchéité du circuit, et procurant une sécurité supplémentaire en cas de rupture du premier voile.

Les deux voiles sont supportés en partie supérieure par le joint 300, et fixés en partie inférieure au mât central, par exemple par un collier de serrage 420, 430.

Par ailleurs, le premier voile, qui est exposé aux projections de copeaux, doit pourvoir être remplacé aisément: il est donc monté sur le joint par des moyens démontables, par exemple par une fermeture à glissière 440.

Sur la figure 2, on voit le dispositif utilisé en vue d'une récupération des copeaux provenant d'une intervention sur la conduite 10, par exemple d'un usinage de l'ouverture 20. Le dispositif est alors introduit verticalement dans la conduite, avec les bras repliés contre le mât, par cette ouverture 20. Les bras se déploient ensuite sous l'effet du prégonflage du joint 300, et l'opérateur tourne la manivelle 150 jusqu'à ce que le patin 130 vienne reposer sur le fond de la conduite. Les bras télescopiques sont alors mis en extension, ce qui a pour effet de plaquer le joint 300 contre le sommet de la conduite. L'opérateur met also le joint gonflable sous pression nominale, ce qui a pour effet d'assurer, grâce aux voiles 400 et 410, une étanchéité totale entre l'intérieur 30 de la conduite et l'atmosphère extérieure 40 (pour que l'intérieur de la conduite ne soit jamais en contact avec l'air extérieur, l'introduction du dispositif peut être faite par l'intermédiaire d'une boîte à gants formant sas, et qui peut être retirée lorsque l'étanchéité finale est réalisée et éventuellement contrôlée). Le diamètre important du voile supérieur 400 permet de réaliser toutes les opérations classiques sur l'ouverture 20, y compris celles de soudage avec reprise envers.

**Revendications**

1. Dispositif d'isolement et de protection apte à être introduit et déployé à l'intérieur d'une conduite (10), comportant:
- un mât central (100);
- un joint d'étanchéité déformable (300), apte à épouser la forme intérieure de la conduite;
- une pluralité de bras (200) de longueur variable régulièrement répartis autour du mât, rabattables contre celui-ci pour permettre l'introduction du dispositif dans la conduite, chaque bras supportant le joint à l'une de ses extrémités (230) et étant articulé sur une embase commune (220) à son autre extrémité (210);
- des moyens mécaniques de serrage (110-150), reliés au mât et à l'embase, pour déployer le dispositif et plaquer le joint contre la surface intérieure de la conduite dont il doit épouser la forme;
- un voile (410), supporté à sa périphérie par le joint et apte à isoler de manière étanche les volumes qu'il délimite,

caractérisé par le fait que le mât central est un mât extensible adaptable aux dimensions de la conduite, l'une de ses extrémités (130) formant point d'appui sur le fond de la conduite, et l'autre extrémité portant un organe de manoeuvre (150) des moyens mécaniques de serrage, et par le fait qu'il comporte un second voile (400) supporté à sa périphérie par le joint et, éventuellement, apte à isoler de manière étanche les volumes qu'il délimite.

2. Dispositif selon la revendication 1, caractérisé par le fait que les bras sont des bras télescopiques dont les éléments (240, 250) sont soumis à la tension d'un ressort (260).

3. Dispositif selon la revendication 1, caractérisé par le fait que les bras sont des bras télescopiques dont les éléments (240, 250) sont soumis à la pression d'un vérin pneumatique.

4. Dispositif selon l'une quelconque des revendications 1 à 3, caractérisé par le fait que l'un et l'autre voile sont formés d'une matière élastomère armée.

5. Dispositif selon l'une quelconque des revendications 1 à 4, caractérisé par le fait que l'un au moins des voiles est formé d'une matière thermiquement réfractaire.

6. Dispositif selon l'une quelconque des revendications 1 à 5, caractérisé par le fait que l'un au moins des voiles est fixé au joint au moyen d'une fermeture à glissière (440).

7. Dispositif selon l'une quelconque des revendications 1 à 6, caractérisé par le fait que le joint d'étanchéité est un joint gonflable.

**Patentansprüche**

1. Isolier- und Schutzvorrichtung zur Einführung und Entfaltung im Innern einer Leitung (10), enthaltend:
- einen mittleren Pfosten (100);
- eine verformbare Dichtung (300), die sich an die innere Gestalt der Leitung anpassen kann;
- mehrere Arme (200) variabler Länge, die um den Pfosten gleichmässig verteilt sind und an diesen anlegbar sind, um die Einführung der Vorrichtung in die Leitung zu ermöglichen, wobei jeder Arm die Dichtung an einem seiner Enden (230) trägt und mit seinem anderen Ende (210) an einem gemeinsamen Sockel (220) angelenkt ist;
- mechanische Spanneinrichtungen (110-150), die mit dem Mast und dem Sockel verbunden sind, um die Vorrichtung zu entfalten und die Dichtung gegen die Innenseite der Leitung zu drücken, an deren Gestalt sie sich angleichen soll;
- einen Schleier (410), der an seinem Umfang von der Dichtung gehalten ist und dazu bestimmt ist, die ihn begrenzenden Volumina dicht voneinander zu trennen,
dadurch gekennzeichnet, dass der mittlere Pfosten ein ausfahrbarer Pfosten ist, der an die Abmessungen der Leitung anpassbar ist, wobei das eine seiner Enden (130) einen Anlagepunkt auf dem Boden der Leitung bildet und das andere Ende ein Betätigungsorgan (150) für die mechanischen Spanneinrichtungen trägt, und dass sie einen zweiten Schleier (400) aufweist, der an seinem Umfang von der Dichtung abgestützt ist und gegebenenfalls dazu eingerichtet ist, die ihn begrenzenden Volumina dicht voneinander zu trennen.

2. Vorrichtung nach Anspruch 1, dadurch gekennzeichnet, dass die Arme Telescoparme sind, deren Elemente (240, 250) unter der Spannung einer Feder (260) stehen.

3. Vorrichtung nach Anspruch 1, dadurch gekennzeichnet, dass die Arme Telescoparme sind, deren Elemente (240, 250) unter dem Druck eines pneumatischen Zylinders stehen.

4. Vorrichtung nach einem der Ansprüche 1 bis 3, dadurch gekennzeichnet, dass der eine und der andere Schleier aus einem armierten elastomeren Material bestehen.

5. Vorrichtung nach einem der Ansprüche 1 bis 4, dadurch gekennzeichnet, dass wenigstens der eine der Schleier aus einem thermisch hoch widerstandsfähigen Material besteht.

6. Vorrichtung nach einem der Ansprüche 1 bis 5, dadurch gekennzeichnet, dass wenigstens der eine der Schleier an der Dichtung mittels eines Reissverschlusses (440) befestigt ist.

7. Vorrichtung nach einem der Ansprüche 1 bis 6, dadurch gekennzeichnet, dass die Dichtung eine aufblasbare Dichtung ist.

**Claims**

1. Insulation and protection device able to be introduced and deployed inside a pipe (10), comprising:
- a central post (100);
- a deformable gasket (300), able to follow the internal shape of the pipe;
- a plurality of arms (200) of variable length, uniformly distributed around the post, able to be folded back against the latter in order to allow the introduction of the device into the pipe, each arm supporting the gasket at one of its ends (230) and being pivoted on a common base (220) at its other end (210);
- mechanical tightening means (110-150), connected to the post and to the base, for deploying the device and pressing the gasket against the inner surface of the pipe whose shape it is intended to follow;
- a sheet (410), supported on its periphery by the gasket and able to insulate the volumes which it defines in a tight manner,
characterised by the fact that the central post is an extensible post able to be adapted to the dimensions of the pipe, one of its ends (130) forming a support point on the base of the pipe and the other end supporting a member (150) for operating the mechanical tightening means and by the fact that it comprises a second sheet (400) supported on its periphery by the gasket and, possibly, able to insulate the volumes which it defines in a tight manner.

2. Device according to claim 1, characterised by the fact that the arms are telescopic arms, whereof the members (240, 250) are subject to the tension of a spring (260).

3. Device according to claim 1, characterised by the fact that the arms are telescopic arms, whereof the members (240, 250) are subject to the pressure of a pneumatic jack.

4. Device according to one of claims 1 to 3, characterised by the fact that the sheets are formed by a reinforced elastomeric material.

5. Device according to one of claims 1 to 4, characterised by the fact that at least one of the sheets is formed by a thermally refractory material.

6. Device according to one of claims 1 to 5, characterised by the fact that at least one of the sheets is fixed to the gasket by means of a closure arrangement comprising a slide (440).

7. Device according to one of claims 1 to 6, characterised by the fact that the gasket is an inflatable gasket.

FIG_1

FIG_2